# EUROPÄISCHE PATENTSCHRIFT

(11) **EP 0 935 915 B1**
(45) Veröffentlichungstag und Bekanntmachung des Hinweises auf die Patenterteilung: **15.11.2000**
(21) Anmeldenummer: 98123162.4
(22) Anmeldetag: 04.12.1998
(51) Int. Cl.: A01F 15/07

(54) **Wickelvorrichtung einer Presse mit einer Materialrolle und einer Vorratsrolle**
Wrapping device of a press with a supply roll and a stock roll
Dispositif d'enveloppage d'une presse avec un rouleau d'alimentation et un rouleau d'approvisionnement

(30) Priorität: 16.01.1998 US 8367
(43) Veröffentlichungstag der Anmeldung: 18.08.1999
(73) Patentinhaber: DEERE & COMPANY, Moline, Illinois 61265-8098 (US)
(72) Erfinder: Phillips, Kenneth Craig, Ottumwa, Iowa 52501 (US)
(74) Vertreter: Magin, Ludwig Bernhard

(56) Entgegenhaltungen:
- DE-U- 9 211 541

## Beschreibung

Die Erfindung betrifft eine Wickelvorrichtung einer Presse mit einer Materialrolle und einer Vorratsrolle (vgl. DEU 9211541).

Der Prospekt KRONE VARIO PACK, Druckvermerk VDV - Vario Pack - 156302 - -5' - 10.97" zeigt eine Rundballenpresse mit einer Netzbindevorrichtung an deren Vorderseite. Diese Netzbindevorrichtung enthält einen Raum, in dem eine Netzrolle und deren Abzugswalzen und Führungen untergebracht sind. In einem darüber befindlichen Raum ist Platz für eine Vorratsrolle und/oder Garnrollen geschaffen, so daß eine bereits aufgebrauchte Netz- oder Garnrolle relativ leicht durch neue ersetzt werden können. Während der Raum der Vorratsrollen mit einem schwenkbaren Deckel verschlossen ist, ist der Raum mit der in Benutzung befindlichen Netzrolle nach vorne offen.

Das der Erfindung zugrunde liegende Problem wird darin gesehen, daß sich einerseits auf der Netzrolle in dem offenen Raum Erntegut absetzen kann, während andererseits zum Austausch der Netzrollen zunächst der andere Raum geöffnet und die Vorratsrolle aus dem Vorratsfach genommen werden muß. Dieses Problem ist gravierend, weil eine Netzrolle ein beträchtliches Gewicht innehat.

Dieses Problem ist auf erfinderische Weise durch die Merkmale des Patentanspruchs 1 gelöst worden, wobei in den davon abhängigen Patentansprüchen vorteilhafte Weiterentwicklungen enthalten sind.

Auf diese Weise sind die Vorratsrolle und die in Benutzung befindliche Materialrolle in demselben Gehäuse untergebracht und somit gegen groben Schmutz geschützt. Die Ablagestellen der Vorratsrolle und der in Benutzung befindlichen Materialrolle befinden sich dicht nebeneinander und sind nicht in zwei getrennten Kammern vorgesehen. Daher ist von einer Bedienungsperson nur ein relativ geringer Transportweg zu überbrücken, was umso einfacher ist, als die volle Vorratsrolle nur aus einer oberen Stellung herabgelassen werden muß. Die Verwendung von Stützen nur im Endbereich der Vorratsrolle läßt es zudem zu, daß die schwere Vorratsrolle Endbereich für Endbereich abgesenkt wird. Schließlich ist kein Boden einer zusätzlichen Kammer vorhanden, der neben Kosten auch eine Einschränkung des für den Zugriff zu der aktiven Materialrolle oder deren Antriebselemente erforderlichen Raums bedeuten würde.

Die Verwendung einer Spann- oder Bremsvorrichtung an der aktiven Materialrolle stellt sicher, daß das Material, also insbesondere Netz aber auch Folie, fest auf dem Rollenmantel anliegt und die aktive Materialrolle auch nach dem Trennvorgang nicht merklich nachläuft. Die Verwendung schwenkbarer Arme und einer von diesen beaufschlagten Rolle macht es möglich, sich dem jeweiligen Rollendurchmesser anzupassen. Dabei kann die Rolle sowohl an den Armen direkt aufgenommen werden, als auch eine separat gelagerte Rolle an die Materialrolle andrücken.

Die gemeinsame Verwendung sowohl der Spannvorrichtung als auch der Stützen ist insbesondere dann möglich, wenn sich deren Bewegungsbereiche bzw. Standorte nicht tangieren, indem die Arme z. B. seitlich der Stützen, d. h. innen oder außen, beweglich sind.

Die Verwendung konkaver Auflageböden auf oder an den Stützen hat den Vorteil, daß die Vorratsrolle während des rauhen Betriebs einer Presse auf dem Feld nicht wesentlich rollt. Vielmehr verbleibt diese an ihrer Stelle und verursacht somit keine Schäden an dem Gehäuse.

Stützen, die um vertikal Achsen schwenkbar sind, z. B. mittels Scharnieren, Gelenken, Achsen, Wellen oder dergleichen, machen es möglich, die Stützen in eine Stellung zu bringen, in der sie einen uneingeschränkten Freiraum zwischen den Ablageorten der Vorratsrolle und der aktiven Materialrolle schaffen. Folglich kann die Vorratsrolle bei Bedarf problemlos nach unten in den dann freien Raum der aktiven Materialrolle abgesenkt werden.

Um zu vermeiden, daß die Stützen ihre Stellung verändern, ist eine formschlüssige Arretierung vorgesehen, die z. B. aus einem Vorsprung und einer Ausnehmung bestehen kann. Der Vorsprung kann ein Niet, eine Schraube, eine Kante oder dergleichen sein. Die Sicherung des Formschlusses wird vorzugsweise durch eine Feder, z. B. eine Druckfeder erreicht, da deren Kraft bei entsprechender Bemessung von einer Bedienungsperson leicht überwunden werden kann.

Eine montagetechnisch einfache Anordnung der Feder wird dadurch erreicht, daß diese auf einer die Stütze haltenden Schraube konzentrisch zwischen deren Kopf oder Mutter und dem Gehäuse oder der Stütze angeordnet wird.

Eine Führungsrolle für das Material in Wirkverbindung mit der Zuführrolle hat den Vorteil, daß das Material z. B. gestreckt wird und somit eine gute Mitnahmewirkung durch die Zuführrolle erreicht wird. Damit das Material nach dem Auflegen einer neuen Materialrolle aber einfach in den engen Spalt zwischen der Zuführrolle und der Führungsrolle eingefügt werden kann, ist wenigstens ein Endbereich der Führungsrolle von der Zuführrolle abhebbar.

Angesichts der relativ langen Zeit zum Einfädeln des neuen Materials und der Tatsache, daß eine Bedienungsperson beide Hände für den Einfädelvorgang benötigt, ist es von großem Vorteil, wenn die Führungsrolle von einem Hebel getragen wird, der in einer Stellung festlegbar ist, in der die Führungsrolle den Abstand zu der Zuführrolle beibehält.

Mittels eines Kraftspeichers, der zwischen einem Deckel des Gehäuses und der auf der Materialrolle aufliegenden Rolle zum Spannen des Materials wirkt, ist es möglich, diese Rolle außer Betrieb zu nehmen, wenn der Deckel angehoben wird und somit den Zugang zu der Materialrolle freizugeben. Umgekehrt wird die Rolle automatisch auf die Materialrolle aufgedrückt, sobald der Deckel geschlossen wird.

In der Zeichnung ist ein nachfolgend näher beschriebenes Ausführungsbeispiel der Erfindung gezeigt. Es zeigt:
- Figur 1: eine Presse mit einer erfindungsgemäßen Wickelvorrichtung in Seitenansicht und
- Figur 2: die Wickelvorrichtung in vergrößerter Darstellung und in Seitenansicht.

Zu Beginn sei darauf hingewiesen, daß verschiedene Komponenten als in Paaren existierend beschrieben werden, während nur eine von jedem Paar gezeigt ist, und daß dies so zu verstehen ist, daß die nicht gezeigte Komponente von der gleichen oder ähnlichen Beschaffenheit wie die gezeigte ist.

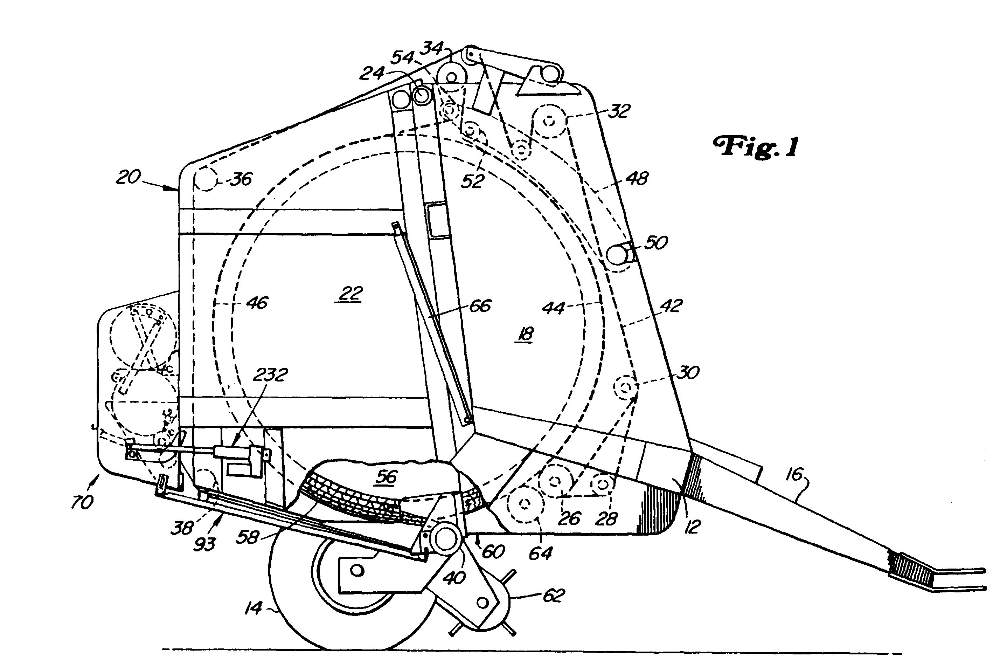

In Figur 1 ist eine Presse 10 des Typs gezeigt, der große zylindrische Ballen herstellt und der allgemein als eine große Rundballenpresse bezeichnet wird. Die Presse 10 enthält einen Rahmen 12, der von einem Paar Bodenrädern 14 getragen wird. Eine Deichsel 16 ist an dem Rahmen 12 festgemacht und so ausgebildet, daß sie an einen Ackerschlepper angeschlossen werden kann. Ein Paar in der Querrichtung einen Abstand zueinander aufweisender Seitenwände 18 ist mit dem Rahmen 12 verbunden und besitzt rückwärtige aufrechte Endbereiche. Ein Ballenentladegatter 20 mit sich gegenüberliegenden Seitenwänden 22 ist - wie bei 24 - vertikal schwenkbar an oberen rückwärtigen Stellen der Seitenwände 18 angebracht, wobei die Seitenwände 22 vordere Endbereiche aufweisen, die gegen die rückwärtigen Endbereiche der Seitenwände 18 anschlagen, wenn sich das Ballenauslaßgatter 20 in einer unteren geschlossenen Stellung befindet, wie dies gezeigt ist.

Die Paare Seitenwände 18 und 22 nehmen die sich gegenüberliegenden Endbereiche einer Vielzahl von Stützrollen für die Riemen zum Bilden von Ballen auf, die sich nahe des Außenbereichs der Seitenwände befinden. Beginnt man an einer unteren mittigen Stelle der Seitenwände 18 und fährt man entgegen des Uhrzeigerdrehsinns fort, dann sind eine angetriebene Rolle 26, eine untere vordere Rolle 28, eine vordere Zwischenrolle 30, eine obere vordere Rolle 32 und eine obere rückwärtige Rolle 34 vorgesehen; und wenn man von einer oberen rückwärtigen Stelle der Seitenwände 22 des Ballenentladegatters 20 aus weiter entgegen dem Uhrzeigerdrehsinn verfährt, dann ist eine obere rückwärtige Rolle 36, eine untere rückwärtige Rolle 38 und eine untere vordere Rolle 40 montiert. Eine Vielzahl endloser Riemen 42 zum Bilden eines Ballens ist zwischen dem Paar Seitenwände 18 und 22 vorgesehen und Seite an Seite von den verschiedenen Rollen 26 getragen.

Mit der Ausnahme einiger Riemen 42, die die untere vordere Rolle 28 überspringen, sind die Riemen 42 so gebildet, daß sie nacheinander die Rollen 26, 28, 30, 32, 36, 38, 40 und 34 beaufschlagen. Ein vorderes Trum 44 der Riemen 42 erstreckt sich von der angetriebenen Rolle 26 nach oben zu der Rolle 34. In gleicher Weise erstreckt sich ein rückwärtiges Trum 46 der Riemen 42 von der unteren vorderen Rolle 40 des Ballenentladegatters 20 aus nach oben zu der Rolle 34. Vordere und rückwärtige Umlenkrollen 52 und 54, die einen geringen Abstand zueinander aufweisen, sind zwischen rückwärtigen Endbereichen eines Paares sich nach hinten erstreckender Spannarme 48, die bei 50 vertikal schwenkbar an einer Stelle in halber Höhe an den vorderen Seitenwänden 18 angebracht sind, montiert, wobei die Trume 44 und 46 mit den Seitenwänden 18 und 22 zusammenwirken, um eine ausdehnbare Ballenbildungskammer 56 zu bilden, die an ihrer Oberseite von den Umlenkrollen 52 und 54 geschlossen ist und sich hier in einem Zustand beträchtlicher Ausdehnung und mit einem Ballen 58 zeigt. Wenn die Ballenbildungskammer 56 leer ist, konvergieren das vordere und das rückwärtige Trum 44 bzw. 46 der Riemen 42 von der Antriebsrolle 26 und der unteren vorderen Rolle 40 des Ballenentladegatters 20 aus nach oben und verlaufen nahe beieinander zwischen den Rollen 52 und 54, wobei das Trum 44 eine rückwärtige Oberfläche der vorderen Rolle 52 berührt und wobei das Trum 46 die vordere Oberfläche der rückwärtigen Rolle 54 berührt, so daß die Ballenbildungskammer 56 von der Seite aus gesehen eine Keilform einnimmt. Der Boden der Ballenbildungskammer 56 ist mit einem Guteinlaß 60 versehen, der sich zwischen der angetriebenen Rolle 26 und der unteren vorderen Rolle des Ballenentladegatters 20 erstreckt. Das Erntegut wird mittels einer Pick-Up 62 in den Guteinlaß 60 eingeführt, um zu einem Ballen, wie etwa dem Ballen 58, aufgerollt zu werden, und zwar infolge der Wirkung der vorderen und der rückwärtigen Trume 44 und 46 der Riemen 42, die jeweils so angetrieben werden, daß sie sich zu dem Guteinlaß 60 hin- und von diesem wegbewegen, und anfänglich auch von einer Starterrolle 64, die nahe der angetriebenen Rolle 26 in den Seitenwänden 18 drehbar aufgenommen ist und in der gleichen Richtung wie diese angetrieben wird, so daß sie Erntegut abstreift, das von dem vorderen Trum 44 der Riemen 42 nach unten mitgenommen wird. Wenn der Ballen 58 gebildet wird, vergrößert sich die Ballenbildungskammer 56 nachgebend bis zu der gezeigten vorbestimmten Größe, und zwar gegen die Kraft, die von einem Spannsystem in die Riemen 42 eingeleitet wird, das das Paar Spannarme 48 zusammen mit einem Paar nicht gezeigter Spannfedern und einem Paar nicht gezeigter Hydraulikzylinder einschließt, die zwischen die Seitenwände 18 und die Spannarme 48 eingefügt sind, um einer nach oben gerichteten Bewegung der Spannarme 48 in einer wohl bekannten Art und Weise zu widerstehen. Ein Paar Hydraulikzylinder 66 für das Ballenentladegatter 20 ist vorgesehen, um das Ballenentladegatter 20 um einen Schwenkanschluß 24 nach oben in eine offene Stellung zu schwenken, wenn dies gewünscht wird, um den Ballen 58 auf den Boden zu entladen.

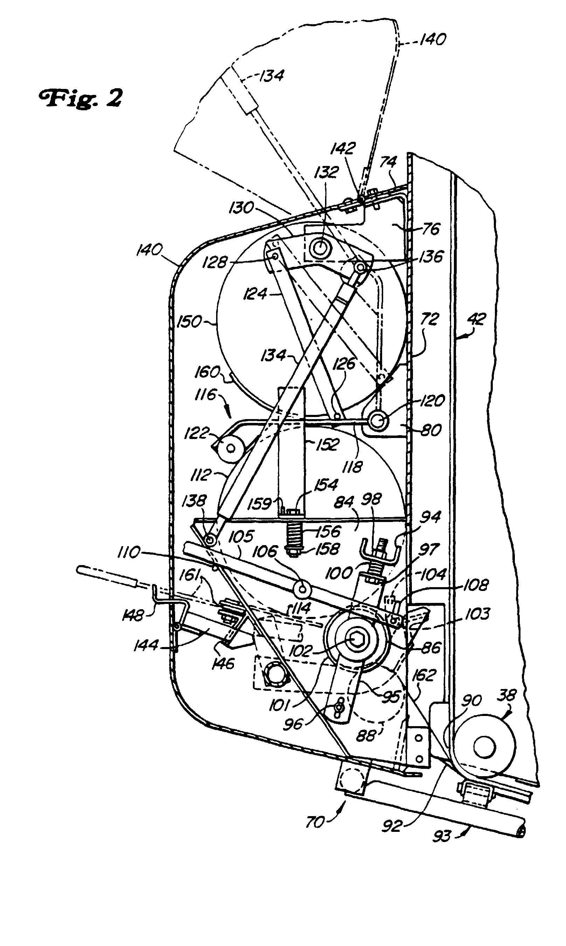

In Figur 2 ist eine Wickelvorrichtung 70 gezeigt, die an die Rückseite und den Boden des Ballenentladegatters 20 angebracht ist, um in der Ballenbildungskammer 56 gebildete Ballen, wie den Ballen 58, vor der Ablage auf dem Boden zu umwickeln. Es wird bemerkt, daß die Wickelvorrichtung 70 in der nachfolgend beschriebenen Weise konstruiert ist, um einen Streifen von einem als Netz ausgebildeten Material abzugeben, das eine Breite aufweist, die größer ist als die Breite der Ballenbildungskammer 56, und zwar in solch einem Maß, daß sich das Material über die Endkanten des Ballens 58 erstreckt. Im einzelnen enthält die Wickelvorrichtung 70 einen Tragrahmen, der auf der unteren Hälfte der Rückseite des Ballenentladegatters 20 montiert ist und eine quer verlaufende vertikale Wand 72 aufweist, die sich zwischen vertikalen Flanschen erstreckt und an diesen angebracht ist, die die rückwärtigen Enden der sich gegenüberliegenden Seitenwände 22 des Ballenentladegatters 20 bilden. Die Wand 72 besitzt einen oberen Endbereich, der von einem sich nach unten und hinten erstreckenden Flansch 74 gebildet wird. Entsprechende quer verlaufende Schenkel eines Paars winkelförmiger Halter 76 zum Tragen von Hebelarmen ist an oberen rechten und linken Bereichen der Wand 72 unterhalb des Flansches 74 angeschraubt. Ein Paar winkelartiger Stützen 80 zum Halten von Spannarmen ist mit einem vertikalen Abstand nach unten zu dem Paar Halter 76 vorgesehen und besitzt quer verlaufende Schenkel, die an die Wand 72 angeschraubt sind. Der Tragrahmen der Wickelvorrichtung 70 enthält ferner ein Paar sich längs erstreckender vertikaler Tragwände 84, die in der Seitenansicht ungefähr rechtwinklig sind und vordere vertikale Seiten aufweisen, die von quer verlaufenden Flanschen gebildet werden, die einen unteren Bereich der Wand 72 überlappen und mittels nicht gezeigten Gewinde aufweisenden Befestigungsmitteln an den Aufbau im rückwärtigen Bereich des Ballenentladegatters 20 angebracht sind, um so in der Querrichtung einen Abstand zueinander aufzuweisen, der größer ist als der Abstand zwischen den Seitenwänden 22 des Ballenentladegatters 20, d. h. größer als die Breite der Ballenbildungskammer 56.

Ein Paar Zuführrollen 86 und 88 für das Material erstreckt sich zwischen den Tragwänden 84 und ist mit seinen gegenüberliegenden Endbereichen in diesen drehbar gelagert, wobei die Zuführrolle 86 gegenüber der Zuführrolle 88 nach oben und hinten versetzt angeordnet ist, und zwar derart, daß eine Flugbahn, die von einer Ebene definiert wird, die sich im Bereich des Spalts tangential mit Bezug auf die Zuführrollen 86, 88 erstreckt, unter der Wand 72 verläuft und auf ein vertikal verlaufendes Trum der Riemen 42 trifft, das sich zwischen der oberen und der unteren die Riemen 42 tragenden Rolle 36 bzw. 38 erstreckt. Die Flugbahn des Materials schneidet die Riemen 42 an einer Stelle oberhalb einer Erfassungsstelle 90, die von einem Bereich 92 einer Netzmaterialführungswanne, die einen Teil eines Wickelmaterialführungszusammenbaus 93 bildet, und einem Bereich der Riemen 42 gebildet wird, der in Eingriff mit der unteren rückwärtigen Rolle 38 steht. Die obere Zuführrolle 86 für das Netzmaterial ist so angeordnet, daß sie auf die untere Zuführrolle 88 für das Netzmaterial zugespannt wird. Im einzelnen ist an der Außenseite jeder der Tragwände 84 ein U-förmiger Halter 94 angebracht. Ein Spannbügel 95 mit einem Längsschlitz, in dem ein Führungsstift 96 oder Schraube aufgenommen wird, der an der Tragwand 84 befestigt ist, ist unterhalb der Halter 94 angebracht und besitzt nach außen gewendete obere Endbereiche, die parallel zu jedem der Halter 94 angeordnet sind. Ein Paar Schrauben 97 erstreckt sich jeweils durch das Paar nach außen gewendeter Endbereiche der Spannbügel 95 und durch die benachbarten Halter 94 nach oben und jede wird in einer eingestellten Stellung von einer Mutter 98 gehalten, die auf deren oberen Gewindebereich aufgenommen wird. Eine Spiralfeder 100 befindet sich auf jeder Schraube 97 und ist zwischen dem zugeordneten Halter 94 und dem Spannbügel 95 eingespannt. Ein Haltebolzen 102, der der drehbaren Lagerung der Zuführrolle 86 auf einer Spindel des Spannbügels 95 dient, erstreckt sich nahe durch eine mittige Stelle entlang der Länge von jedem Spannbügel 95 und durch eine kreisförmige Spielöffnung 101, die sich in der benachbarten Wand 84 befindet, wobei die Bewegung der Zuführrolle 86 zu der unteren Zuführrolle 88 hin und von dieser weg durch die jeweiligen Schlitze in den unteren Bereichen der Spannbügel 95 zugelassen wird. Eine Führungsrolle 103 für das Material befindet sich nahe eines oberen vorderen Teils der oberen Zuführrolle 86 und erstreckt sich zwischen dem unteren Endbereich eines Stegs 104, der selbst an einer linken Tragwand 84 angebracht ist, und einem vorderen Endbereich eines Hebels 105, der zum teilweisen Anheben der Führungsrolle 103 in einer Lagerstelle 106 an der rechten Tragwand 84 schwenkbar befestigt ist und ist an diesen angebracht. Die Führungsrolle 103 ist mittels eines Stifts 107 an dem Hebel 105 befestigt, der sich durch einen Schlitz 108 auf einem Kreis um die Lagerstelle 106 in der Tragwand 84 erstreckt. Wenn sich das rechte Ende der Führungsrolle 103 in einer unteren Betriebsstellung befindet, in der sich der Stift 107 am Boden des Schlitzes 108 befindet, erstreckt sich ein rückwärtiger Bereich des Hebels 105 oberhalb eines als Bolzen ausgebildeten Anschlags 110 und liegt an diesem an, der an einer rückwärtigen Stelle der Tragwand 84 befestigt ist. Wenn es gewünscht wird, eine bestimmte Länge von Netz um die Führungsrolle 103 zu legen, wie dies nachfolgend beschrieben wird, wird der rückwärtige Teil des Hebels 105 gezogen oder nach außen über den Anschlag 110 hinaus abgelenkt und abgesenkt, um das rechte Ende der Führungsrolle 103 anzuheben, was darin resultiert, daß sich der Stift 107 zu dem oberen Teil des Schlitzes 108 bewegt. Der Hebel 105 wird dann in seiner unteren Stellung gehalten, indem er unter den Anschlag 110 gebracht wird.

Die obere Zuführrolle 86 ist vorzugsweise in der Art eines Metallgrundkörpers ausgebildet, der mit Gummi mit einem hohen Reibwert beschichtet wird oder einen solchen Überzug besitzt und, wie dies aus Figur 2 hervorgeht, entgegen der Uhrzeigerdrehrichtung angetrieben wird. Der Antrieb der Zuführrolle 86 ist in nicht gezeigter Weise als Riemengetriebe mit einer variablen Riemenscheibe und einer Riemenscheibe ausgebildet, die auf einer Welle befestigt ist, die als eine Verlängerung der unteren Rolle 38 angeschlossen ist, so daß stets eine direkte Beziehung zwischen der Geschwindigkeit der Riemen 42 und der Umfangsgeschwindigkeit der Zuführrollen 86, 88 für das Material besteht, um somit eine relativ hohe Spannung in dem Material während des Umwickelns des Ballens 58 zu erzeugen, wobei diese Spannung idealerweise so hoch ist wie sie sein kann, ohne daß das Material reißt oder während der Handhabung des umwickelten Ballens 58 der Gefahr des Zerreißens unterliegt.

Eine sogenannte aktive, d.h. in Betrieb befindliche Materialrolle 112 wird - wenn überhaupt - in einem geringen Maß von einem Paar Rampen 114 getragen, die sich jeweils quer von den Tragwänden 84 weg erstrecken und geringfügig nach unten zu der oberen Zuführrolle 86 hin geneigt sind und nahe einer halbhohen Stelle von dieser enden, bevor jegliches Material benutzt wird und wenn sich die Zuführrollen 86 und 88 in einem nicht angetriebenen Bereitschaftszustand befinden. Es ist bedeutsam festzuhalten, daß die Spannung in dem Materialsegment, das sich zwischen der Führungsrolle 103 und der Einzugsstelle zwischen der Materialrolle 112 und der Zuführrolle 86 erstreckt, dazu neigt, das gesamte Gewicht der Materialrolle 112 auf die Zuführrolle 86 zu verlagern, wenn die Zuführrollen 86 und 88 angetrieben werden. Der Hauptzweck der Rampen 114 ist es, eine Hilfe im Einlegen der Vorratsrolle 112 in ihre Betriebsstellung auf der Zuführrolle 86 zu bieten.

Um die aktive Materialrolle 112 mit dem Material in Eingriff mit der Zuführrolle 86 zu drücken, ist eine Spannvorrichtung 116 vorgesehen, die ein Paar einen Querabstand zueinander aufweisender Arme 118 aufweist, deren vordere Endbereiche mittels eines Paars Bolzen 120 an das Paar Stützen 80 schwenkbar angebracht sind. Eine Rolle 122 ist drehbar in den rückwärtigen Endbereichen der Arme 118 aufgenommen und so angeordnet, daß sie sich im wesentlichen frei drehen kann und einen geringen Reibeingriff mit dem oberen rückwärtigen Quadranten der Materialrolle 112 beibehält, wenn die Materialrolle 112 kleiner wird, wenn das Material dazu benutzt wird, den Ballen 58 zu umwickeln. Die Spannvorrichtung 116 enthält ferner ein Paar Lenker 124, deren untere Endbereiche jeweils auf einem Paar Stifte 126, die an die Arme 118 angeschweißt sind, schwenkbar aufgenommen sind, und deren obere Endbereiche jeweils schwenkbar etwas mittels Stiften 128 an rückwärtige Schenkel eines Paars von Hebelarmen 130 angebracht sind, die jeweils etwa mittels Stiften 132 an das Paar Halter 76 schwenkbar angeschlossen sind. Eine nachgiebige Kraft zum Drücken der Rolle 122 gegen die Materialrolle 112 mit dem Wickelmaterial wird von einem Paar Kraftspeicher 134 in der Art von Gasdruckzylinder 134 aufgebracht, deren Stangenenden jeweils etwa mittels eines Paares von Stiften 136 an vordere Schenkel des Paars von Hebelarmen 130 schwenkbar angebracht sind, und deren Zylinderenden jeweils etwa mittels eines Paars von Stiften 138 an gegenüberliegenden Seitenwänden eines Deckels 140 schwenkbar angeschlossen sind. Der Deckel 140 besitzt eine obere Wand, die mittels eines Scharniers 142 an den Flansch 74 schwenkbar angebracht ist, das es erlaubt, daß der Deckel 140 aus einer unteren geschlossenen Stellung, wie sie in durchgezogenen Linien gezeigt ist und in der aufrechte vordere Enden der Seitenwände an der Rückseite des Ballenentladegatters 20 anliegen, nach oben in eine angehobene Stellung um einen Winkel geschwenkt wird, der ausgehend von der geschlossenen Stellung mehr als 90 Grad beträgt, wie dies in unterbrochenen Linien dargestellt ist. Zusätzlich zu der Spannung der Rolle 122 gegen die Materialrolle 112 des Wickelmaterials ist der geometrische Zusammenhang zwischen der Wirkungslinie der Kraftspeicher 124 und den Stiften 132 der Hebelarme 130 derart, daß sich die Kraftspeicher 134 über eine Totpunktstellung bewegen und den Deckel 140 in seiner offenen Stellung gespannt halten. Der Deckel 140 wird mittels eines Riegels 144 lösbar in seiner geschlossenen Stellung gehalten, der in einer Öffnung eines Riegelhalters 146 aufgenommen wird, der sich zwischen den Tragwänden 84 erstreckt und mit diesen verbunden ist. Ein Verriegelungshebel 148 ist an einer mittigen Stelle einer Rückwand des Deckels 140 schwenkbar angebracht und so bedienbar, daß er den Riegel 144 wahlweise aus oder in eine verriegelte Verbindung mit dem Riegelhalter 146 bewegt.

Eine Vorratsrolle 150 für das Material ist oberhalb und in unmittelbarer Nähe zu der Materialrolle 112 gelagert. Stützen zum Tragen der Vorratsrolle 150 enthalten ein Paar aufrechter Schenkel 152, die jeweils nach außen gewendete Endbereiche aufweisen, die nachgiebig an horizontalen Flanschen gesichert sind, die die oberen Seiten der Tragwände 84 bilden. Im einzelnen wird die Verbindung jedes Schenkels 152 mit der zugeordneten Tragwand 84 mittels einer Schraube 154 hergestellt, die sich durch fluchtende Bohrungen in dem Schenkelende und dem Flansch der Tragwand 84 erstreckt und als eine Spiraldruckfeder ausgebildete Feder 156 trägt, die mittels einer Mutter 158 auf dem unteren Endbereich der Schraube 154 ortsfest gehalten wird. Je ein als Niet ausgebildeter Vorsprung 159 erstreckt sich durch jeweils einen nach außen gewendeten Endbereich der Schenkel 152 und besitzt einen Kopf (nicht sichtbar), der einen Anschlag bildet, der in einer Ausnehmung in dem betreffenden horizontalen Flansch der Seitenwand 84 aufgenommen wird. Eine einen Auflageboden 160 bildende Blechplatte, die entlang eines Kreisbogens gekrümmt ist, um so eine obere konkave Stützfläche oder Sattel zu bilden, auf der der rückwärtige untere Quadrant eines entsprechenden Endbereichs der Vorratsrolle 150 ruht, erstreckt sich um eine kurze Strecke von dem Schenkel 152 aus quer nach innen und ist an diesem befestigt, und zwar an einer Stelle, die einen Abstand von der Oberseite des Schenkels 152 aus nach unten aufweist.

Es wird bemerkt, daß es die nachgiebige Anbringung der Schenkel 152 erlaubt, daß, sobald der Kopf des Vorsprungs 159 aus der Ausnehmung in dem Flansch gehoben wurde, jeder von ihnen manuell um die von der Schraube 154 definierte vertikale Achse gedreht werden kann, wie dies während der Bewegung der Vorratsrolle 150 an ihren Ort gewünscht wird, sobald die Materialrolle 112 aufgebraucht ist. Im einzelnen wird zum Neupositionieren der Vorratsrolle 150 zunächst der Deckel 140 in seine offene Stellung angehoben und der leere Rollenkern der Materialrolle 112 entfernt. Ein Paar von Rollenladestützen 161, die als Leisten ausgebildet und schwenkbar an entsprechenden Stellen nahe der Höhe der Rampen 114 schwenkbar angebracht sind, damit sie um aufrechte Achsen geschwenkt werden können, werden dann aus sich seitlich erstreckenden Wartestellungen, wie sie in durchgezogenen Linien dargestellt sind, in sich nach hinten erstreckende Tragestellungen geschwenkt, wie sie in unterbrochenen Linien dargestellt sind. Der rechte Endbereich der Führungsrolle 103 wird dann durch die Bewegung des Hebels 105 in seine untere Stellung unter dem Anschlagbolzen 110 angehoben. Die Vorratsrolle 150 wird dann auf die Rollenladestützen 161 abgesenkt. Es wird dann eine Länge des Materials von der Vorderseite der Vorratsrolle 150 abgezogen und vor der Führungsrolle 103 nach unten und dann nach hinten um die Führungsrolle 103 und über die obere Zuführrolle 86 und dann nach vorne durch den Spalt zwischen den Zuführrollen 86 und 88 geführt. Der rechte Endbereich der Führungsrolle 103 wird dann in seine Betriebsstellung zurückgebracht, indem der Hebel 105 in seine Haltestellung über dem Anschlag 110 bewegt wird. Die Schenkel 152 der endseitigen Stützen der Vorratsrolle 150 werden dann angehoben, um die Köpfe der Vorsprünge 159 aus den jeweiligen Ausnehmungen zu lösen, und dann um 180 Grad gedreht, so daß sich die Auflageböden 160 nach außen erstrecken. Wenn die Auflageböden 160 aus dem Weg sind, werden die Arme 118 zusammen mit der Rolle 122, die den Druck anlegt, manuell in eine im wesentlichen vertikale Stellung angehoben, wie sie in unterbrochenen Linien gezeigt ist, in der sie ihren Totpunkt überschritten haben und angehoben bleiben. Wenn die Rolle 122 aus dem Weg ist, kann die Vorratsrolle 150 über die ebenen Rampen 114 zu ihrem Ort auf der Zuführrolle 86 gerollt werden. Die Arme 118 werden dann abgesenkt, so daß die Rolle 122 die neue Materialrolle 112 berührt. Die Rollenladestützen 161 werden dann zurück in ihre Wartestellung gebracht, die Auflageböden 160 werden in ihre Betriebsstellungen gebracht und der Deckel 140 wird geschlossen. Wenn es angebracht ist, wird die entfernte Vorratsrolle 150 dadurch ersetzt, daß wiederum der Deckel 140 geöffnet wird, die Rollenladestützen 161 in ihre Ladestellungen gebracht werden und eine neue Vorratsrolle 150 auf die Rollenladestützen 161 gerollt wird. Die neue Vorratsrolle 150 wird dann auf die Auflageböden 160 gehoben, und zwar Endseite für Endseite, wenn dies gewünscht wird. Der Deckel 140 wird dann geschlossen.

Unter dem Gehäuse der Wickelvorrichtung 70 ist der gesamte von dem Deckel 140 und der Wand 72 begrenzte Raum zu verstehen.

Es wird somit erkenntlich, daß die Vorratsrolle 150 unmittelbar oberhalb der Materialrolle 112 bequem unter dem Deckel 140 untergebracht ist, um einfach an ihre Stelle bewegt zu werden, in der sie die Materialrolle 112 ersetzt, wenn diese aufgebraucht ist.

Nach einem nicht gezeigten Ausführungsbeispiel können die Stützen aus J-förmigen Stahlbügeln bestehen, die getrennt voneinander an der Wand 72 angebracht werden. Zudem können die die Rolle 122 tragenden Arme 118 auch um Lager schwenkbar sein, die am rückwärtigen Ende der Wickelvorrichtung 70 angeordnet sind. Eine Beaufschlagung durch die Kraftspeicher 134 kann dann in ähnlicher Weise über Hebel erfolgen, die wie die Hebel 118 gelagert sind, sich auf die neuen Hebel mit der Rolle 122 auflegen und von den Kraftspeichern 134 beaufschlagt werden.

## Patentansprüche

1. Wickelvorrichtung (70) einer Presse (10) mit einer Materialrolle (112) und einer Vorratsrolle (150), gekennzeichnet durch ein gemeinsames Gehäuse, in dem voneinander getrennte Stützen zur Aufnahme der Endbereiche der Vorratsrolle (150) oberhalb der Materialrolle (112) vorgesehen sind.

2. Wickelvorrichtung nach Anspruch 1, gekennzeichnet durch eine Spannvorrichtung (116) mit einer Rolle (122) und Armen (118), die einerseits die Rolle (122) an der Materialrolle (112) anlegen und andererseits ortsfest, insbesondere an dem Gehäuse, vertikal schwenkbar angebracht sind.

3. Wickelvorrichtung nach Anspruch 2, dadurch gekennzeichnet, daß sich die Bewegungsebene der Arme (118) seitlich der Stützen erstreckt.

4. Wickelvorrichtung nach einem oder mehreren der vorherigen Ansprüche, dadurch gekennzeichnet, daß die Stützen konkave Auflageböden (160) aufweisen.

5. Wickelvorrichtung nach einem oder mehreren der vorherigen Ansprüche, dadurch gekennzeichnet, daß die Stützen um vertikale Achsen zwischen einer Aufnahmestellung und einer Freigabestellung schwenkbar sind.

6. Wickelvorrichtung nach Anspruch 5, dadurch gekennzeichnet, daß die Stützen mittels eines Vorsprungs (159) und einer Ausnehmung formschlüssig gegen eine Drehbewegung sicherbar und gegen die Wirkung einer Feder (156) aus der Formschlußstellung bringbar sind.

7. Wickelvorrichtung nach Anspruch 6, dadurch gekennzeichnet, daß jede Stütze mittels einer beweglichen Schraube (154) gehalten wird und die Feder (156) die Schraube (154) konzentrisch umgibt und vorspannt.

8. Wickelvorrichtung nach einem oder mehreren der vorherigen Ansprüche, gekennzeichnet durch wenigstens eine Zuführrolle (86) und eine Führungsrolle (103), die zwischen sich das Material hindurchführen, wobei die Führungsrolle (103) wenigstens an einem Ende in bezug auf die Zuführrolle (86) beweglich angeordnet ist

9. Wickelvorrichtung nach Anspruch 8, dadurch gekennzeichnet, daß die Führungsrolle (103) mit dem beweglichen Endbereich an einem Hebel (105) gelagert ist, der an einem Anschlag (110) in wenigstens einer Stellung festlegbar ist, in der die Führungsrolle (103) wenigstens teilweise einen Abstand zu der Zuführrolle (86) aufweist.

10. Wickelvorrichtung nach einem oder mehreren der vorherigen Ansprüche, dadurch gekennzeichnet, daß das Gehäuse von einem Deckel (140) verschließbar ist und ein Kraftspeicher (134) mittelbar oder unmittelbar zwischen dem Deckel (140) und der Rolle (122) vorgesehen ist.

## Claims

1. A wrapping device (70) of a baler (10) with a material roll (112) and a reserve roll (150), characterized by a common housing, in which there are provided separate supports for receiving the end regions of the reserve roll (150) above the material roll (112).

2. A wrapping device according to claim 1, characterized by a biasing device (116) with a roller (122) and arms (118), which at one end apply the roller (122) to the material roll (112) and at the other end are mounted at a fixed position, especially on the housing, to pivot vertically.

3. A wrapping device according to claim 2, characterized in that the planes of movement of the arms (118) lie to the side of the supports.

4. A wrapping device according to one or more of the preceding claims, characterized in that the supports comprise concave support pads (160).

5. A wrapping device according to one or more of the preceding claims, characterized in that the supports can pivot about vertical axes between a receiving position and a release position.

6. A wrapping device according to claim 5, characterized in that the supports can be secured against rotation by means of an interlocking projection (159) and recess and can be brought out of the interlocked position against the bias of a spring (156).

7. A wrapping device according to claim 6, characterized in that each support is retained by means of a movable screw (154) and the spring (156) surrounds the screw (154) concentrically and biases it.

8. A wrapping device according to one or more of the preceding claims, characterized by at least one feed roll (86) and a guide roll (103), between which the material passes, wherein the guide roll (103) is arranged movably relative to the feed roll (86) at least at one end.

9. A wrapping device according to claim 8, characterized in that the guide roll (103) is mounted on a lever (105) at the movable end region, which lever can be fixed on a stop (110) at least in a position in which the guide roll (103) is at least partially spaced from the feed roll (86).

10. A wrapping device according to one or more of the preceding claims, characterized in that the housing can be closed by a cover (140) and a biasing device (134) is provided indirectly or directly between the cover (140) and the roller (122).

## Revendications

1. Dispositif d'enveloppement (70) d'une presse (10) comportant un rouleau de matière (112) et un rouleau de réserve (150), caractérisé par un boîtier commun, dans lequel sont prévus des supports séparés les uns des autres servant à loger les parties d'extrémité du rouleau de réserve (150) au-dessus du rouleau de matière (112).

2. Dispositif d'enveloppement selon la revendication 1, caractérisé par un dispositif de tension (116) comportant un rouleau (122) et des bras (118), qui d'une part appliquent le rouleau (122) contre le rouleau de matière (112) et d'autre part sont montés de façon fixe, de manière à pouvoir pivoter verticalement, notamment sur le boîtier.

3. Dispositif d'enveloppement selon la revendication 2, caractérisé en ce que le plan de déplacement des bras (118) s'étend latéralement par rapport aux supports.

4. Dispositif d'enveloppement selon une ou plusieurs des revendications précédentes, caractérisé en ce que les supports possèdent des bases d'appui concaves (160).

5. Dispositif d'enveloppement selon une ou plusieurs des revendications précédentes, caractérisé en ce que les supports peuvent basculer autour d'axes verticaux entre une position de réception et une position de libération.

6. Dispositif d'enveloppement selon la revendication 5, caractérisé en ce que les supports peuvent être bloqués selon une liaison par formes complémentaires, à l'encontre d'un mouvement de rotation, au moyen d'un appendice saillant (159) et d'un évidement, et peuvent être dégagés de la position de liaison par formes complémentaires, à l'encontre de l'action d'un ressort (156).

7. Dispositif d'enveloppement selon la revendication 6, caractérisé en ce que chaque support est retenu au moyen d'une vis mobile (154) et que le ressort (156) entoure concentriquement et précontraint la vis (154).

8. Dispositif d'enveloppement selon une ou plusieurs des revendications précédentes, caractérisé par au moins un rouleau d'amenée (86) et un rouleau de guidage (103), qui guident entre eux la matière, le rouleau de guidage (103) étant disposé de manière à être déplaçable au moins sur une extrémité par rapport au rouleau d'amenée (86).

9. Dispositif d'enveloppement selon la revendication 8, caractérisé en ce que le rouleau de guidage (103) est monté avec la partie d'extrémité mobile sur un levier (105), qui peut être fixé sur une butée (110) dans au moins une position, dans laquelle le rouleau de guidage (103) est situé au moins en partie à une certaine distance du rouleau d'amenée (86).

10. Dispositif d'enveloppement selon une ou plusieurs des revendications précédentes, caractérisé en ce que le boîtier peut être fermé par un couvercle (140), et qu'un accumulateur d'énergie (134) est prévu directement ou indirectement entre le couvercle (140) et le rouleau (122).
